# EUROPÄISCHE PATENTANMELDUNG

(11) **EP 1 138 585 A2**
(43) Veröffentlichungstag der Anmeldung: **04.10.2001**
(21) Anmeldenummer: 01106299.9
(22) Anmeldetag: 15.03.2001
(51) Int. Cl.: B62J 39/00, B62M 25/08

(54) **Datenverarbeitungs- und Anzeigevorrichtung für ein Fahrrad mit Schaltgetriebe**

(30) Priorität: 27.03.2000 DE 10014592
(71) Anmelder: ECS Electronic Component Service GmbH & Co. KG, 53773 Hennef (DE)
(72) Erfinder:
(74) Vertreter: Patentanwälte Lippert, Stachow, Schmidt & Partner

(57) **Zusammenfassung**

Die Erfindung betrifft eine Datenverarbeitungs- und Anzeigevorrichtung (1) für ein Fahrrad mit Schaltgetriebe, mit Mitteln zur Messung der Profildaten der befahrenen Strecke sowie von Fahrtdaten des Fahrrades sowie zur Erzeugung den Fahrer unterstützender Informationen durch Verarbeitung der gemessenen Profildaten und Fahrtdaten, mit wenigstens einem Neigungsmeßsystem mit einem Längsneigungssensor sowie einem Querneigungssensor, einem Geschwindigkeitsmeßsystem, einer Steuerungselektronik mit Mitteln zur Berechnung der optimalen Schaltgetriebeübersetzung durch Verarbeitung registrierter und gemessener Daten, insbesondere der Neigungsdaten des Längsneigungssensors und Querneigungssensors, einem Speicher zur Speicherung der vorhandenen Übersetzungsstufen des Schaltgetriebes, wobei die Steuerungselektronik Mittel zur Ermittlung wenigstens einer Übersetzungsstufe des Schaltgetriebes aufweist, die der berechneten Schaltgetriebeübersetzung nahe kommt, und wenigstens einer Anzeigeeinrichtung (12) zur Anzeige der Meßdaten und der unterstützenden Informationen.

## Beschreibung

Die Erfindung betrifft eine Datenverarbeitungs- und Anzeigevorrichtung für ein Fahrrad mit Schaltgetriebe. Die Vorrichtung soll den Fahrer entlasten. Im Vordergrund stehen die Unterstützung des Fahrers bei der richtigen Wahl der Übersetzungsstufe des Schaltgetriebes sowie die Messung und Speicherung dreidimensionaler Profildaten der gefahrenen Strecke.

Aus der DE 195 28 133 A1 ist eine Vorrichtung zum last- und geschwindigkeitsabhängigen automatischen Schalten des Schaltgetriebes eines Fahrrades bekannt. Die Vorrichtung weist eine als Steuerrechner bezeichnete Datenverarbeitungs- und Anzeigevorrichtung auf. Zur Information des Fahrers soll unter anderem die automatisch eingestellte Übersetzungsstufe des Schaltgetriebes angezeigt werden. Außerdem können Fahrtdaten des Fahrrads sowie Profildaten der befahrenen Strecke gemessen und angezeigt werden.

Unter Fahrtdaten werden im Zusammenhang mit der vorliegenden Erfindung dynamische Größen, wie die Fahrgeschwindigkeit des Fahrrades, die Drehzahl der Räder oder die Tretfrequenz am Tretkurbellager verstanden. Als Profildaten der befahrenen Strecke werden beispielsweise die Steigung beziehungsweise das Gefälle der Fahrstrecke verstanden.

Durch Weiterverarbeitung der gemessenen Fahrtdaten des Fahrrads kann die bekannte Datenverarbeitungs- und Anzeigevorrichtung beispielsweise die momentane Geschwindikeit, die Spitzengeschwindigkeit, die gefahrene Strecke und die Durchschnittsgeschwindigkeit bestimmen.

Die Profildaten der Fahrstrecke, wie Steigung und Gefälle, mißt die bekannte Datenverarbeitungs- und Anzeigevorrichtung mit Hilfe eines in Fahrtrichtung des Fahrrades beziehungsweise in der Bewegungsebene des Fahrrades messenden Neigungssensors.

Allgemein wird jedes Einspurfahrzeug durch die sogenannten Kreiselmomente der Räder gegen Kippen stabilisiert. Bei Kurvenfahrt wird mit einer Lenkbewegung eine Schräglage eingeleitet. Durch den Grad der Schräglage werden die bei Kurvenfahrt vorhandene Fliehkraft und die Gewichtskraft ins Gleichgewicht gebracht.

Die bekannte Datenverarbeitungs- und Anzeigevorrichtung mißt exakte Neigungsdaten dann, wenn das Fahrrad geradeaus fährt. Der Neigungssensor befindet sich dabei in einer aufrechten Lage. Durch die Schräglage des Fahrrades bei Kurvenfahrt werden systematisch fehlerbehafte Steigungs- und Gefälledaten gemessen, weil der Neigungssensor aus der aufrechten Lage gekippt ist.

Ein weiteres Problem besteht darin, dass Straßen, beispielsweise im Gebirge, selten parallel zur Hangneigung sondern meist quer dazu verlaufen. Die meisten Gebirgsstraßen verlaufen in Serpentinen. Dabei überwiegen die geraden Teilstrekken, die quer zum Hang verlaufen. Lediglich in Kurven ergeben sich kurze Teilstrecken in Hangrichtung, die einen anderen Neigungswinkel aufweisen als der Rest der Strecke. In Kurven werden mit dem bekannten Verfahren systematisch Meßwerte erfaßt, die das Gesamtmeßergebnis verfälschen.

In jeder Information, in der die fehlerbehaften oder falschen Neigungsdaten der Strecke weiterverarbeitet werden, setzt sich dieser Fehler fort.

Insbesondere bei der Anzeige der Übersetzungsstufe wird es als nachteilig empfunden, wenn durch fehlerhafte Neigungsdaten eine ungünstige Übersetzungsstufe angezeigt wird. Ein Fahrer, der sich auf die angezeigte Übersetzungsstufe verläßt und danach schaltet, erschöpt seinen Energiehaushalt vorzeitig.

Der Erfindung liegt die Aufgabe zugrunde, eine Datenverarbeitungs- und Anzeigevorrichtung für ein Fahrrad mit Schaltgetriebe zu schaffen, welche die systematischen Fehler der bekannten Vorrichtung vermeidet und genauere Neigungsdaten zur Information des Fahrers und zur Weiterverarbeitung durch eine Steuerungselektronik bereitstellt.

Erfindungsgemäß wird die Aufgabe gelöst durch eine Datenverarbeitungs- und Anzeigevorrichtung für ein Fahrrad mit Schaltgetriebe, mit Mitteln zur Messung der Profildaten der befahrenen Strecke sowie von Fahrtdaten des Fahrrades sowie zur Erzeugung den Fahrer unterstützender Informationen durch Verarbeitung der gemessenen Profildaten und Fahrtdaten, mit wenigstens einem Neigungsmeßsystem mit einem Längsneigungssensor sowie einem Querneigungssensor, einem Geschwindigkeitsmeßsystem, einer Steuerungselektronik mit Mitteln zur Berechnung der optimalen Schaltgetriebeübersetzung durch Verarbeitung registrierter und gemessener Daten, insbesondere der Neigungsdaten des Längsneigungssensors und Querneigungssensors, einem Speicher zur Speicherung der vorhandenen Übersetzungsstufen des Schaltgetriebes, wobei die Steuerungselektronik Mittel zur Ermittlung wenigstens einer Übersetzungsstufe des Schaltgetriebes aufweist, die der berechneten Schaltgetriebeübersetzung nahe kommt, und wenigstens einer Anzeigeeinrichtung zur Anzeige der Meßdaten und der unterstützenden Informationen.

Unter Profildaten der Strecke wird in diesem Zusammenhang das dreidimensionale Profil der gefahrenen Strecke verstanden.

Die Fehler bei der Messung der Neigung sind mit der vorgeschlagenen Konstruktion einer Datenverarbeitungs- und Anzeigevorrichtung beseitigt. Dies, weil außer der in der Bewegungsebene des Fahrrades gemessenen Längsneigung zusätzlich die quer zu dieser vorhandene Querneigung des Fahrrades gemessen wird.

Bei Bergfahrten können die Strecken unterteilt werden in unterschiedliche Streckentypen. Einerseits in solche Streckentypen, die überwiegend parallel zum Hang verlaufende Streckenstücke mit flacher Neigung und wenig stark geneigten hangaufbeziehungsweise hangabwärts führenden Kurvenstücken aufweisen. Andererseits in solche Strecken, die einen hohen Anteil an hangauf- beziehungsweise hangabwärts führenden Kurvenstücken mit starker Neigung und einen geringen Anteil an kurzen Strekkenstücken mit flacher Neigung aufweisen.

Je nachdem, welcher Streckentyp befahren wird, werden die Neigungsdaten der einzelnen Streckenstücke zur Ermittlung der Übersetzungsstufe vorzugsweise unterschiedlich gewichtet.

Zu diesem Zweck enthält die Steuerungelektronik einen Algorithmus, der die Neigungsdaten einer stärker geneigten Kurve dann geringer gewichtet oder ausfiltert, wenn eine überwiegend flach geneigte Strecke befahren wird. Die Neigungsdaten einer stärker geneigten Kurve würden andernfalls zu einer für den Fahrer nicht plausiblen Übersetzungsstufenanzeige führen.

Somit wird es beispielsweise vermieden, dass dem Fahrer, der eine Talfahrt in der 4. Übersetzungsstufe absolviert, in einem kurzen stärker geneigten Kurvenstück die längere 7. Übersetzungsstufe auf der Anzeige vorgeschlagen wird, was für den Fahrer nicht plausibel wäre. Die Anzeige der 7. Übersetzungsstufe wird in diesem Fall unterdrückt.

Wird dagegen eine stark geneigte kurvenreiche Strecke befahren, so werden die Neigungsdaten der wenigen kurzen Streckenstücke mit flacher Neigung ausgefiltert beziehungsweise geringer gewichtet, um für den Fahrer eine nicht plausible Übersetzungsstufenanzeige zu verhindern.

Die unterschiedliche Gewichtung einzelner Streckenstücke ist erst durch die Kombination eines Längs- und eines Querneigungssensors möglich. Aus der bei Kurvenschräglage gemessen Längsneigung ist in Abhängigkeit von der Querneigung die tatsächliche Längsneigung bestimmbar. Fehler bei der Weiterverarbeitung der Neigungsdaten sind ausgeschlossen.

Es ist vorgesehen, dass die Anzeige sowohl während der Fahrt als auch beim Stillstand des Fahrrades arbeitet. Im Stillstand werden zumindest Profildaten der Strecke, nämlich Steigung beziehungsweise Gefälle angezeigt. Sobald das Fahrrad in Bewegung versetzt wird, werden durch Verarbeitung der Profildaten und der momentanen Fahrtdaten den Fahrer unterstützende Informationen generiert, die ihn entlasten. Insbesondere wird die bestmögliche Übersetzungsstufe des Schaltgetriebes angezeigt sowie in Abstufungen die der bestmöglichen Übersetzungsstufe benachbarten Übersetzungsstufen. Letztere Maßnahme überläßt dem Fahrer mehrere Optionen zweckmäßiger Übersetzungsstufen. Innerhalb dieser Übersetzungsstufen kann der Fahrer solche mit höherem oder niedrigerem aufzubringendem Tretmoment wählen. Durch Verwendung einer der Übersetzungsstufen werden grobe Schaltfehler vermieden.

Vorteilhaft sind der Längsneigungssensor sowie der Querneigungssensor des Neigungsmeßsytem als mikromechanische Beschleunigungssensoren ausgebildet und weist die Steuerungselektronik Mittel zur Ermittlung desjenigen Anteils der gemessenen Beschleunigung auf, der bei Steigungsfahrt oder Gefällefahrt vom Fahrer initiiert ist und in Richtung oder entgegen der Fallbeschleunigung wirkt. Weil zur Neigungsmessung mikromechanische Beschleunigungssensoren vorgesehen sind, ist eine präzise und lineare Neigungswinkelmessung bei minimaler Baugröße des Neigungsmeßsystems möglich. Die Beschleunigungssensoren messen jeweils eine Gesamtbeschleunigung, die sich zusammensetzt aus der jeweils wirksamen Komponente der im Schwerefeld der Erde konstanten Fallbeschleunigung von 9,81 m/s² und dem durch den Fahrer initiierten Beschleunigungsanteil, der in Richtung oder entgegen der Fallbeschleunigung wirkt.

Der in Richtung oder entgegen der wirksamen Komponente der Fallbeschleunigung wirkende und vom Fahrer initiierte Anteil der gemessenen Längsbeschleunigung wird einfacherweise aus dem Quotient einer Geschwindigkeitsänderung und dem Zeitintervall berechnet, in dem die Geschwindigkeitsänderung stattgefunden hat. Das gleiche gilt für die Querbeschleunigung. Das Zeitintervall kann beispielsweise aus der gemessenen Raddrehzahl berechnet werden.

Um dem Fahrer stets exakte Informationen über die Neigung in Längsrichtung der Strecke anzeigen zu können, weist die Steuerungselektronik Mittel zur Differenzbildung zwischen der gemessenen Längsbeschleunigung und dem vom Fahrer initiierten Anteil der Längsbeschleunigung auf. Die auf diese Weise ermittelte Beschleunigungsdifferenz wird zur Berechnung der Streckenneigung benutzt.

Wegen deren geringer Baugröße sind vorzugsweise monolithische Halbleitersensoren vorgesehen. Das Neigungsmeßsystem dieser Ausführungsform ist günstigerweise in die Steuerungselektronik integriert.

Eine besondere Konstruktion ist für ein Fahrrad vorgesehen, das ein Kettenschaltgetriebe mit einem Kettenradsatz am Tretkurbellager und einem Kettenritzelsatz am Antriebsrad aufweist. Eine Kettenschaltung weist immer zum Teil solche Übersetzungsstufen auf, bei denen die Ebene des momentan benutzten Kettenrads und die Ebene des momentan benutzten Kettenritzels in einem Abstand parallel nebeneinanderliegen. Je weiter diese Ebenen auseinanderliegen, dest höher ist die Beanspruchung der Kette, weil diese aus der Flucht läuft. Für ein Fahrrad mit einem solchen Kettenschaltgetriebe wird ein weiterer Nutzen darin gesehen, dass die Steuerungselektronik ein Beschränkungsmittel aufweist, das die Anzeige einer Übersetzungsstufe dann verhindert, wenn zwischen der Ebene des benutzten Kettenrads und der Ebene des benutzten Kettenritzels ein bestimmter Abstand überschritten ist. Die Beanspruchung der Kette wegen nicht fluchtendem läßt sich so auf ein ertragbares Maß beschränken.

Für ungeübte Fahrer sind besonders Fahrräder mit einem Kettenschaltgetriebe schwierig handzuhaben. Dies, weil der Wechsel einer Übersetzungsstufe konstruktionsbedingt nur während der Fahrt möglich ist. Zum Wechseln einer Übersetzungsstufe muß die Kette von einem Kettenrad des Kettenradsatzes abgerollt und umgeworfen werden zu einem benachbarten Kettenrad. Das gleiche gilt für ein Kettenritzel des Kettenritzelsatzes. Ein ungeübter Fahrer, der nicht vorausschauend an eine Steigung heranfährt, wählt leicht eine Übersetzungsstufe, die Ihm in der Steigung ein zu hohes Tretmoment abverlangt. Dann nimmt die Geschwindigkeit ab und wird die Wahrscheinlichkeit geringer, die Übersetzungsstufe nochmals wechseln zu können. Irgendwann erreicht der Fahrer eine Pedalstellung, in der das erforderliche Tretmoment so groß geworden ist, dass er die Pedale nicht mehr weiter treten kann und gezwungen ist vom Fahrrad abzusteigen, um nicht das Gleichgewicht zu verlieren. Besonders gefährlich ist dies im fließenden Straßenverkehr.

Insbesondere für ungeübte Fahrer, die ein Fahrrad mit einem Kettenschaltgetriebe benutzen, ist die Erfindung hilfreich. Zu Beginn eines Steigungsstücks hat ein Fahrrad stets noch eine ausreichende Geschwindikeit, um die Übersetzungsstufe des Kettenschaltgetriebes zu wechseln. Außerdem hat das Neigungsmeßsystem den Wert der Steigung bereits gemessen. Verzögerungsfrei ermittelt die Steuerungselektronik mit diesen zur Verfügung stehenden Daten eine oder mehrere plausible Übersetzungsstufen. Solche nämlich, die dem Fahrer immer nur ein solch hohes Tretmoment abverlangen, das er auch leisten kann. Der Fahrer muß zu Beginn einer Steigung nur darauf achten, dass er eine von der Datenverarbeitungs- und Anzeigevorrichtung verzögerungsfrei vorgeschlagene Übersetzungsstufe am Schaltgetriebe einstellt. Auf diese Weise vermeidet er einen groben Schaltfehler zuverlässig.

Mit der erfindungsgemäßen Datenverarbeitungs- und Anzeigevorrichtung kann der sportliche Charakter eines modernen Kettenschaltgetriebes erhalten bleiben. So können beispielsweise für einen Wechsel von der Übersetzungsstufe 2 in die Übersetzungsstufe 7 alle dazwischenliegenden Übersetzungstufen 3, 4, 5 und 6 sequentiell durchschaltet werden. Andererseits ist es auch möglich schneller zu schalten, indem einzelne Übersetzungsstufen übersprungen werden. Es kann zum Beispiel direkt von der Übersetzungsstufe 2 in die Übersetzungsstufe 7 gewechselt werden.

Zweckmäßig weist die Anzeigeeinrichtung wenigstens eine radialsymmetrische Analoganzeige und/oder wenigstens eine Digitalanzeige auf. Diese zeigen beispielsweise Längs- und Querneigung, Uhrzeit, Momentangeschwindigkeit, Spitzengeschwindigkeit, die gefahrene Strecke und die Durchschnittsgeschwindigkeit an.

Die Analoganzeige ist einfacherweise aus farbveränderbaren oder helligkeitsveränderbaren Teilkreisektoren gebildet. Selbstverständlich handelt es sich hierbei um eine quasi analoge Anzeige, weil der Skalenwert nur in den durch die einzelnen Teilsektoren vorgegebenen Stufen angezeigt werden kann. Der analoge Charakter der Anzeige hängt damit von der Anzahl der auf einem Winkel von 360° vorgesehenen Teilsektoren ab. Je mehr Teilsektoren vorhanden sind, desto höher ist die Genauigkeit der Analoganzeige.

Vorzugsweise ist die Analoganzeige in einen inneren Kreis sowie einen äußeren Kreisring unterteilt, wobei jeweils ein Teilkreissektor des inneren Kreises und ein Teilkreissektor des äußeren Kreisrings fluchtend hintereinander liegen.

In einer einfachen Ausführungsform ist zur Anzeige der Fahrradneigung vorgesehen, dass mit dem inneren Kreis der Analoganzeige entweder die Querneigung oder die Längsneigung des Fahrrades anzeigbar ist und entsprechend mit dem äußeren Kreisring der Analoganzeige jeweils die verbleibende andere Neigung anzeigbar ist. Diese Anzeige stellt die Fahrradneigung nach Art einer Balkenanzeige dar. Neigt sich das Fahrrad beginnen Teilsektoren, zu leuchten. Mit zunehmender Neigung leuchten mehr und mehr Teilsektoren.

Eine alternative Darstellungsweise zeigt eine Fahrradgesamtneigung an, die sich aus der Quer- und Längsneigung ergibt. Hierbei dienen jeweils ein Teilkreissektor des inneren Kreises und der dazu fluchtende Teilkreissektor des äußeren Kreisrings der Analoganzeige gemeinsam zur Anzeige der Quer- und Längsneigung. Die beiden fluchtenden Teilkreissektoren bilden einen Leuchtzeiger, der drei verschiedene Längen aufweisen kann. Die Leuchtzeigerlänge 'Null' zeigt an, dass keine Längs- und keine Querneigung vorhanden ist. Wenn die Leuchtzeigerlänge der Länge des Teilkreissektors des inneren Kreises entspricht, liegt eine geringe Gesamtneigung vor. Entspricht die Leuchtzeigerlänge der Summe der Länge des Teilkreissektors des inneren Kreises zuzüglich der Länge des äußeren Teilkreissektors, so liegt eine höhere Gesamtneigung vor.

Über die genaue Querneigung im Verhältnis zur Längsneigung informiert die Zeigerstellung des Leuchtzeigers. Wenn die Zeigerstellung des Leuchtzeigers der Zeigerstellung '12.00 Uhr' einer Analoguhr entspricht, ist das Fahrrad in einer aufrechten Position auf einer Gefällestrecke ohne Querneigung. Bei einer Zeigerstellung '6.00 Uhr' befindet sich das Fahrrad auf einer Steigungsstrecke ohne Querneigung. Weist der Leuchtzeiger hingegen in Richtung '3.00 Uhr' oder '9.00 Uhr', so ist eine Fahrt mit Querneigung angezeigt. Der Winkelbetrag, um den der Zeiger aus der Zeigerstellung '12.00 Uhr' gekippt ist, entspricht der momentanen Querneigung des Fahrrades im Verhältnis zu seiner Längsneigung. Auch bei einer vorhandenen Querneigung zeigt die momentane Leuchtzeigerlänge den Grad der Gesamtneigung an.

Einen Zusatznutzen schafft ein Speicher, der Mittel zur Speicherung der Masse des Fahrrades sowie der Masse des Fahrers oder der Gesamtmasse von Fahrrad und Fahrer aufweist. Diese Daten werden zusätztlich bei der Berechnung der optimalen Schaltgetriebeübersetzung weiterverarbeitet und nehmen Einfluß bei der Bestimmung der bestmöglichen Übersetzungsstufe. Überdies kann die Steuerungselektronik einen Algorithums aufweisen, mit dem aus der Gesamtmasse von Fahrer und Fahrrad sowie der Höhendifferenz der Strecke die mittlere vom Fahrer aufgebrachte Leistung und die geleistete Arbeit zu berechnen ist. Die mittlere vom Fahrer aufgebrachte Leistung und die geleistete Arbeit sind ebenfalls Informationen, die dem Fahrer auf der Anzeigeeinrichtung präsentiert werden können. Sie geben dem Fahrer beispielsweise Sicherheit bei der Einschätzung seiner Leistungsreserven für die restliche Strecke.

Ferner können Mittel zur Speicherung von Grenzwerten für die Fahrtdaten des Fahrrades vorgesehen sein, und die Steuerungselektronik Mittel zur Erzeugung von Sicherheitshinweisen aufweisen, die bei Überschreitung eines solchen Grenzwerts auf der Anzeigeeinrichtung signalisiert werden. Beispielsweise kann ein Sicherheitshinweis erfolgen, wenn ein Geschwindigkeitsgrenzwert überschritten wird.

Der Speicher kann weiterhin durch ein Mittel zur Speicherung von Grenzwerten für die Profildaten einer Strecke ergänzt sein, und die Steuerungselektronik kann Mittel zur Erzeugung von Sicherheitshinweisen aufweisen, die bei Überschreitung eines solchen Grenzwerts signalisiert werden. So kann zum Beispiel ein Sicherheitshinweis signalisiert werden, sobald der Grenzwert für ein Gefälle der Fahrstrecke überschritten wird. Aus der Straßenverkehrsordnung bekannte Sicherheitshinweise an extremen Steigungen oder Gefällen können dem Fahrer mit Hilfe der Datenverarbeitungs- und Anzeigevorrichtung auch im nicht erschlossenen Gelände geboten werden. Sie erhöhen die Sicherheit für den Fahrer. Vorteilhaft zeigt die Datenverarbeitungs- und Anzeigevorrichtung Änderungen im Streckenprofil verzögerungsfrei an. Der Fahrer erhält die Information über Steigungen oder Gefälle daher nicht nur an beschilderten Stellen sondern zu jeder Zeit an jedem Ort der Strecke.

Eine weitere Verbesserung ist es, wenn Mittel zur Speicherung von Kombinationen von Fahrtdaten und/oder Profildaten vorgesehen sind, und die Steuerungselektronik Mittel zur Erzeugung von Sicherheitshinweisen aufweist, die beim Erreichen oder Überschreiten einer gespeicherten Kombination signalisiert werden. Die Überschreitung eines Grenzwerts für die Geschwindigkeit bei Kurvenfahrt kann auf diese Weise zum Beispiel abhängig gemacht werden von der Schräglage des Fahrrades bei Kurvenfahrt.

Die Handhabung der Vorrichtung läßt sich weiterhin verbessern durch eine Steuerungselektronik, die Mittel zur Erkennung des optimalen Schaltzeitpunkts zwischen den Übersetzungsstufen des Schaltgetriebes aufweist. Dem Fahrer kann auf diese Weise der optimale Schaltzeitpunkt signalisiert werden. Dies, beispielsweise durch ein entsprechendes optisches oder akustisches Signal.

Weiterhin hilfreich ist es, wenn eine Diebstahlwarneinrichtung vorgesehen ist.

Vorzugsweise ist die Diebstahlwarneinrichtung ein- und ausschaltbar.

Weil die mikromechanischen Beschleunigungssensoren des Neigungsmeßsystems präzise und lineare Neigungswinkelmessung liefern ist auch die Diebstahlwarneinrichtung sehr zuverlässig und genau. Außerdem ist ihre Baugröße minimal.

Zur bestmöglichen Vermeidung von Fehlauslösungen ist die Diebstahlwarneinrichtung insbesondere mit dem Neigungsmeßsystem und dem Geschwindigkeitsmeßsystem verbunden und weist eine Bewegungserkennungseinrichtung auf, die den Bewegungszustand des Fahrrades im eingeschalteten Zustand überwacht und nur dann einen Alarm auslöst, wenn das Fahrrad für eine vorbestimmte Zeitdauer gefahren, getragen oder auf andere Weise transportiert worden ist. Die Bewegungserkennungseinrichtung wertet zwecks Überwachung des Bewegungszustandes des Fahrrads die Daten aus, die von dem Neigungsmeßsystem und dem Geschwindigkeitsmeßsystem geliefert werden.

Ein weiterer Nutzen ergibt sich, wenn eine Datenschnittstelle vorgesehen ist, mit der die gemessenen und gespeicherten Profildaten zu einem Auswertungscomputer übertragbar sind, der ein dreidimensionales Profil der gefahrenen Strecke wiedergeben kann.

Nachfolgend ist die Erfindung in einer Zeichnung beispielhaft veranschaulicht und anhand der Figuren detailliert beschrieben. Es zeigen:
- Fig. 1: eine Datenverarbeitungs- und Anzeigevorrichtung, in einem Anzeigemodus, der die Momentangeschwindigkeit und die Streckenneigung anzeigt,
- Fig. 2: eine Datenverarbeitungs- und Anzeigevorrichtung, im Anzeigemodus gemäß Fig 1, wobei ein Gefälle angezeigt wird,
- Fig. 3: eine Datenverarbeitungs- und Anzeigevorrichtung, in einem Anzeigemodus, der die Uhrzeit anzeigt,
- Fig. 4: eine Datenverarbeitungs- und Anzeigevorrichtung, in einem Anzeigemodus, der die Momentangeschwindigkeit und die Kurvenschräglage anzeigt,
- Fig. 5: eine schematische Darstellung der Übersetzungstufenanzeige der Datenverarbeitungs- und Anzeigevorrichtung.

Die Zeichnung stellt eine Ausführungsform der Datenverarbeitungs- und Anzeigevorrichtung 10 für ein Fahrrad mit einem Kettenschaltgetriebe dar.

Die Datenverarbeitungs- und Anzeigevorrichtung 10 besteht aus einem kompakten Gehäuse 11, das beispielsweise an einem Fahrradlenker anbringbar ist. In dem Gehäuse 11 ist ein Neigungsmeßsystem mit einem Längsneigungssensor sowie einem Querneigungssensor, einem Geschwindigkeitsmeßsystem, einer Steuerungselektronik, einem Speicher zur Speicherung der vorhandenen Übersetzungsstufen des Schaltgetriebes, und einer Anzeigeeinrichtung 12 mit einer radialsymmetrischen Analoganzeige 13 und einer Digitalanzeige 14 für die Geschwindigkeit sowie einer radialsymmetrischen Analoganzeige 15 und einer Digitalanzeige 16 für die Neigung der Fahrstrecke beziehungsweise die Kurvenschräglage des Fahrrades, vorgesehen.

Der analoge Teil der Anzeigeeinrichtung 12 ist in dem vorliegenden Ausführungsbeispiel in einen inneren Kreis 18 mit der Analoganzeige 15 sowie einen diesen umgebenden äußeren Kreisring 20 mit der Analoganzeige 13 unterteilt. Die Analoganzeigen 13 und 15 des Ausführungsbeispiels sind aus helligkeitsveränderbaren Teilkreisektoren 13a beziehungsweise 15a gebildet. Je nachdem, welcher Anzeigemodus eingestellt ist, können die Skalierungen der Analoganzeigen 13 und 15 wechseln.

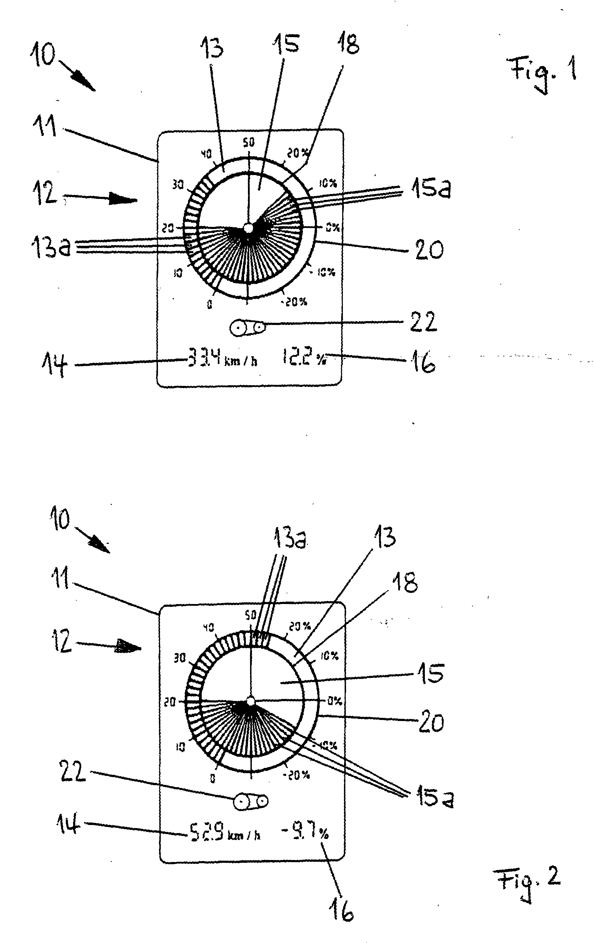

In den Figuren 1 und 2 ist die Datenverarbeitungs- und Anzeigevorrichtung in einem Anzeigemodus dargestellt, in dem sie die Momentangeschwindigkeit und die Streckenneigung anzeigt. Zur Anzeige der Streckenneigung wird in der vorliegenden Ausführungsform die rechte Hälfte der Analoganzeige 15 benutzt. Zusätzlich wird die prozentuale Streckenneigung mit der Digitalanzeige 16 angegeben. Sofern es sich, wie in Fig 2, um ein Gefälle handelt, ist die prozentuale Streckenneigung mit einem negativen Vorzeichen versehen, hier -9,7 %. Die Analoganzeige 13 gibt in den Anzeigemodi der Figuren 1 und 2 die Momentangeschwindigkeit an. Letztere wird außerdem über die Digitalanzeige 14 in der Einheit km/h angeboten. Zwischen den Analoganzeigen 13 und 15 sowie den Digitalanzeigen 14 und 16 befindet sich die Übersetzungsstufenanzeige 22, die am besten in der Einzeldarstellung gemäß Fig. 5 erkennbar und anhand dieser beschrieben ist.

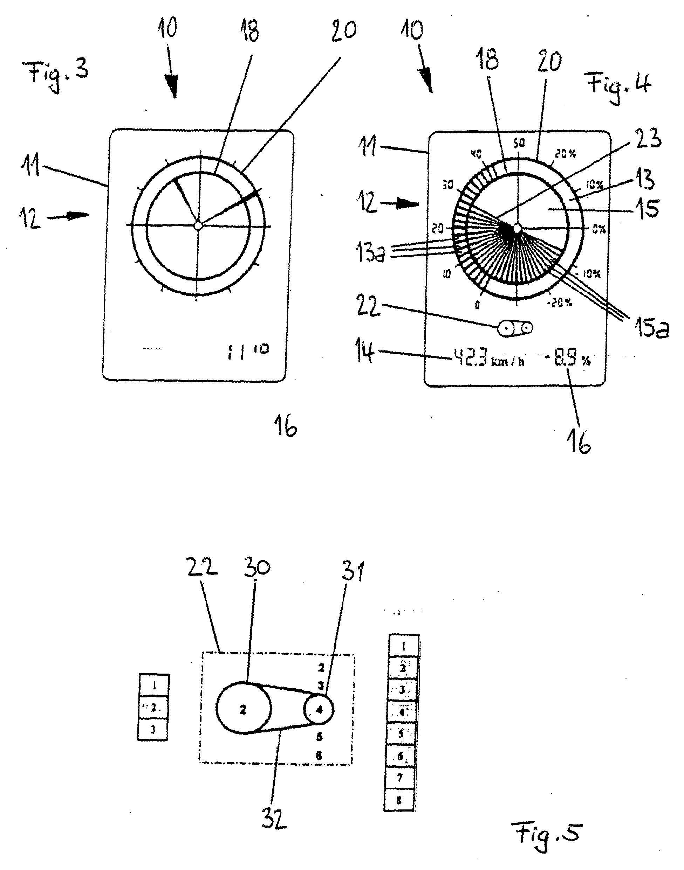

Fig. 3 stellt einen Anzeigemodus der Datenverarbeitungs- und Anzeigevorrichtung dar, in dem sowohl der innere Kreis 18 sowie der äußere Kreisring 20 des analogen Teils der Anzeige, wie Zeiger und Ziffernblatt einer Uhr zur Abbildung der Uhrzeit dienen. Ferner ist die Uhrzeit 11.¹⁰ Uhr auch mit der Digitalanzeige 16 wiedergegeben.

Ein weiterer Anzeigemodus der Datenverarbeitungs- und Anzeigevorrichtung ist in Fig. 4 veranschaulicht. Der innere Kreis 18 der Analoganzeige zeigt hierbei die Kurvenschräglage des Fahrrades an. Zu diesem Zweck sind die Teilkreissektoren 15a auf einer Halbkreisfläche erhellt. Die Teilkreissektoren 15a der übrigen Halbkreisfläche bleiben dunkel. Die gestrichelte Trennlinie 23 zwischen den erhellten und den dunklen Teilkreissektoren 15a symbolisiert die Schräglage des Fahrrades. Überdies zeigt die Digitalanzeige 16 die Kurvenschräglage prozentual an. Dabei ist gemäß Fig. 4 die prozentuale Kurvenschräglage in einer Linkskurve mit einem negativen Vorzeichen versehen, hier -8,9 %.

Der äußere Kreisring 20 der Analoganzeige gemäß Fig. 4 gibt wiederum die Momentangeschwindigkeit an. Außerdem wird mit der Digitalanzeige 14 die Momentangeschwindigkeit, hier 42,3 km/h angezeigt.

In Fig. 5 handelt es sich bei dem durch die strichpunktierte Linie eingerahmten Teil der Darstellung um die Übersetzungsstufenanzeige 22. Diese besteht im wesentlichen aus einem großen Kreis 30, der den Kettenradsatz am Tretkurbellager symbolisiert, einem kleinen Kreis 31, der den Kettenritzelsatz am Antriebsrad symbolisiert und einer symbolhaft dargestellten Kette 32, die um ein Kettenrad und ein Kettenritzel gelegt ist. Links neben dem strichpunktierten Rahmen der Übersetzungsstufenanzeige 22 sind, zum besseren Verständnis, die drei Kettenräder 1, 2 und 3 des Kettenradsatz des Tretkurbellagers und rechts neben dem strichpunktierten Rahmen die acht Kettenritzel 1, 2, 3, 4, 5, 6, 7 und 8 des Kettenritzelsatzes symbolisch angedeutet.

In dem dargestellten Beispiel ist das Kettenrad Nr. 2 in dem großen Kreis 30 der Übersetzungsstufenanzeige 22 angezeigt. Dieses soll bei der momentanen Fahrt und Streckensituation mit einem der Kettenritzel Nr. 2, 3, 4, 5 oder 6 des Kettenritzelsatzes kombiniert werden können, die in der Übersetzungsstufenanzeige 22 sichtbar gemacht sind.

In dem in Fig. 5 gezeigten Augenblick bietet die Übersetzungsstufenanzeige 22 also fünf plausible Übersetzungstufen an, zwischen denen der Fahrer frei wählen kann. Diese Übersetzungsstufen überanstrengen den Fahrer nicht. Er kann die erforderlichen Tretmomente aufbringen.

Alternativ kann eine Übersetzungsstufenanzeige vorgesehen sein, die jeweils nur die entsprechende Ziffer eines Kettenrades und des dazu optimalen Kettenritzels zur Anzeige bringt, wobei die übrigen Ziffern unsichtbar sind.

### Bezugszeichenliste

- 10: Datenverarbeitungs- und Anzeigevorrichtung
- 11: Gehäuse
- 12: Anzeigeeinrichtung
- 13: Analoganzeige
- 13a: Teilkreissektor
- 14: Digitalanzeige
- 15: Analoganzeige
- 15a: Teilkreissektor
- 16: Digitalanzeige
- 18: innerer Kreis
- 18a: rechte Hälfte
- 20: äußerer Kreisring
- 22: Übersetzungsstufenanzeige
- 23: Trennlinie
- 30: großer Kreis
- 31: kleiner Kreis
- 32: Kette

## Patentansprüche

1. Datenverarbeitungs- und Anzeigevorrichtung für ein Fahrrad mit Schaltgetriebe, mit Mitteln zur Messung der Profildaten der befahrenen Strecke sowie von Fahrtdaten des Fahrrades sowie zur Erzeugung den Fahrer unterstützender Informationen durch Verarbeitung der gemessenen Profildaten und Fahrtdaten, mit wenigstens einem Neigungsmeßsystem mit einem Längsneigungssensor sowie einem Querneigungssensor, einem Geschwindigkeitsmeßsystem, einer Steuerungselektronik mit Mitteln zur Berechnung der optimalen Schaltgetriebeübersetzung durch Verarbeitung registrierter und gemessener Daten, insbesondere der Neigungsdaten des Längsneigungssensors und Querneigungssensors, einem Speicher zur Speicherung der vorhandenen Übersetzungsstufen des Schaltgetriebes, wobei die Steuerungselektronik Mittel zur Ermittlung wenigstens einer Übersetzungsstufe des Schaltgetriebes aufweist, die der berechneten Schaltgetriebeübersetzung nahe kommt, und wenigstens einer Anzeigeeinrichtung (12) zur Anzeige der Meßdaten und der unterstützenden Informationen.

2. Datenverarbeitungs- und Anzeigevorrichtung nach Anspruch 1, **dadurch gekennzeichnet, dass** der Längsneigungssensor sowie der Querneigungssensor des Neigungsmeßsytem als mikromechanische Beschleunigungssensoren ausgebildet sind und die Steuerungselektronik Mittel zur Ermittlung desjenigen Anteils der gemessenen Beschleunigung aufweist, der bei Steigungsfahrt oder Gefällefahrt vom Fahrer initiiert ist und in Richtung oder entgegen der Fallbeschleunigung wirkt.

3. Datenverarbeitungs- und Anzeigevorrichtung nach Anspruch 2, **dadurch gekennzeichnet, dass** die Steuerungselektronik Mittel zur Differenzbildung zwischen der gemessenen Längsbeschleunigung und dem vom Fahrer initiierten Anteil der Längsbeschleunigung aufweist.

4. Datenverarbeitungs- und Anzeigevorrichtung nach einem der Ansprüche 1 bis 3, wobei das Schaltgetriebe des Fahrrades als Kettenschaltgetriebe mit einem Kettenradsatz am Tretkurbellager und einem Kettenritzelsatz am Antriebsrad des Fahrrads ausgebildet ist, **dadurch gekennzeichnet, dass** die Steuerungselektronik ein Beschränkungsmittel aufweist, das die Anzeige einer Übersetzungsstufe dann verhindert, wenn zwischen der Ebene des benutzten Kettenrads und der Ebene des benutzten Kettenritzels ein bestimmter Abstand überschritten ist.

5. Datenverarbeitungs- und Anzeigevorrichtung für ein Fahrrad nach einem der Ansprüche 1 bis 4, **dadurch gekennzeichnet, dass** die Anzeigeeinrichtung (12) wenigstens eine radialsymmetrische Analoganzeige (13, 15) und/oder wenigstens eine Digitalanzeige (14, 16) aufweist.

6. Datenverarbeitungs- und Anzeigevorrichtung nach Anspruch 5, **dadurch gekennzeichnet, dass** die Analoganzeige (13, 15) aus farbveränderbaren oder helligkeitsveränderbaren Teilkreisektoren (13a, 15a) gebildet ist.

7. Datenverarbeitungs- und Anzeigevorrichtung nach Anspruch 6, **dadurch gekennzeichnet, dass** die Analoganzeige in einen inneren Kreis (18) sowie einen äußeren Kreisring (20) unterteilt ist, wobei die Teilkreissektoren (13a, 15a) des inneren Kreises (18) und des äußeren Kreisrings (20) fluchtend hintereinander liegen.

8. Datenverarbeitungs- und Anzeigevorrichtung nach Anspruch 7, **dadurch gekennzeichnet, dass** mit dem inneren Kreis (18) entweder die Querneigung oder die Längsneigung des Fahrrades anzeigbar ist und entsprechend mit dem äußeren Kreisring (20) jeweils die verbleibende andere Neigung anzeigbar ist.

9. Datenverarbeitungs- und Anzeigevorrichtung nach Anspruch 7, **dadurch gekennzeichnet, dass** jeweils ein Teilkreissektor (15a) des inneren Kreises (18) und der dazu fluchtende Teilkreissektor (13a) des äußeren Kreisrings (20) gemeinsam zur Anzeige der Quer- und Längsneigung dienen und einen Leuchtzeiger bilden, der folgende Leuchtzeigerlängen aufweisen kann:
- Null,
- Länge des Teilkreissektors des inneren Kreises,
- Summe der Länge des Teilkreissektors des inneren Kreises zuzüglich der Länge des äußeren Teilkreissektors.

10. Datenverarbeitungs- und Anzeigevorrichtung nach Anspruch 9, **dadurch gekennzeichnet, dass** durch den Leuchtzeiger, wenn dessen Zeigerstellung der Zeigerstellung '12.00 Uhr' oder '6.00 Uhr' einer Analoguhr entspricht, eine aufrechte Position des Fahrrades ohne Querneigung angezeigt ist, **dass** durch den Leuchtzeiger, wenn dieser in Richtung '3.00 Uhr' oder '9.00 Uhr' weist, eine Fahrt mit Querneigung angezeigt ist, und **dass** durch die Leuchtzeigerlänge der Grad der Gesamtneigung angezeigt ist.

11. Datenverarbeitungs- und Anzeigevorrichtung für ein Fahrrad nach einem der Ansprüche 1 bis 6, **dadurch ge** **kennzeichnet,** dass der Speicher Mittel zur Speicherung der Masse des Fahrrades sowie der Masse des Fahrers oder der Gesamtmasse von Fahrrad und Fahrer aufweist.

12. Datenverarbeitungs- und Anzeigevorrichtung für ein Fahrrad nach einem der Ansprüche 1 bis 7, **dadurch gekennzeichnet, dass** Mittel zur Speicherung von Grenzwerten für die Fahrtdaten des Fahrrades vorgesehen sind, und **dass** die Steuerungselektronik Mittel zur Erzeugung von Sicherheitshinweisen aufweist, die bei Überschreitung eines Grenzwerts auf der Anzeigeeinrichtung (12) signalisiert werden.

13. Datenverarbeitungs- und Anzeigevorrichtung für ein Fahrrad nach einem der Ansprüche 1 bis 8, **dadurch gekennzeichnet, dass** Mittel zur Speicherung von Grenzwerten für die Profildaten einer Strecke vorgesehen sind, und **dass** die Steuerungselektronik Mittel zur Erzeugung von Sicherheitshinweisen aufweist, die bei Überschreitung eines Grenzwerts auf der Anzeigeeinrichtung (12) signalisiert werden.

14. Datenverarbeitungs- und Anzeigevorrichtung für ein Fahrrad nach einem der Ansprüche 1 bis 9, **dadurch gekennzeichnet, dass** Mittel zur Speicherung von Kombinationen von Fahrtdaten vorgesehen sind, und **dass** die Steuerungselektronik Mittel zur Erzeugung von Sicherheitshinweisen aufweist, die beim Erreichen oder Überschreiten einer gespeicherten Kombination auf der Anzeigeeinrichtung (12) signalisiert werden.

15. Datenverarbeitungs- und Anzeigevorrichtung für ein Fahrrad nach einem der Ansprüche 1 bis 10, **dadurch gekennzeichnet, dass** die Steuerungselektronik Mittel zur Erkennung des optimalen Schaltzeitpunkts zwischen den Übersetzungsstufen des Schaltgetriebes aufweist.

16. Datenverarbeitungs- und Anzeigevorrichtung nach einem der Ansprüche 1 bis 15, **dadurch gekennzeichnet, dass** eine Diebstahlwarneinrichtung vorgesehen ist.

17. Datenverarbeitungs- und Anzeigevorrichtung nach Anspruch 16, **dadurch gekennzeichnet, dass** die Diebstahlwarneinrichtung ein- und ausschaltbar ist.

18. Datenverarbeitungs- und Anzeigevorrichtung nach Anspruch 16 oder 17, **dadurch gekennzeichnet, dass** die Diebstahlwarneinrichtung insbesondere mit dem Neigungsmeßsystem und dem Geschwindigkeitsmeßsystem verbunden ist und eine Bewegungserkennungseinrichtung aufweist, die den Bewegungszustand des Fahrrades im eingeschalteten Zustand überwacht und dann einen Alarm auslöst, wenn das Fahrrad für eine vorbestimmte Zeitdauer gefahren, getragen oder auf andere Weise transportiert worden ist.

19. Datenverarbeitungs- und Anzeigevorrichtung nach einem der Ansprüche 1 bis 18, **dadurch gekennzeichnet, dass** eine Datenschnittstelle vorgesehen ist, mit der die gemessenen und gespeicherten Profildaten zu einem Auswertungscomputer übertragbar sind, der ein dreidimensionales Profil der gefahrenen Strecke wiedergeben kann.
